# FASCICULE DE BREVET EUROPEEN

(11) **EP 4 558 790 B1**
(45) Date de publication et mention de la délivrance du brevet: **21.10.2026**
(21) Numéro de dépôt: 23738493.8
(22) Date de dépôt: 03.07.2023
(51) Int. Cl.: G01B 17/04, F03D 13/25, F03D 17/00, G01M 5/00, G01S 7/52, G01S 7/521, G01S 15/10, G01S 15/88, E02D 27/52

(54) **DISPOSITIF DE DÉTERMINATION DE L'ALLONGEMENT D'UN LIEN**
VORRICHTUNG ZUR BESTIMMUNG DER DEHNUNG EINES VERBINDUNGSELEMENTS
DEVICE FOR DETERMINING THE ELONGATION OF A LINK

(30) Priorité: 21.07.2022 FR 2207471
(43) Date de publication de la demande: 28.05.2025
(73) Titulaire: Institut Francais de Recherche pour l'Exploitation de la Mer (IFREMER), 29280 Plouzané (FR)
(72) Inventeur: REPECAUD, Michel, 29280 Plouzané (FR)
(74) Mandataire: Icosa
(86) Numéro de dépôt international: PCT/EP2023/068263
(87) Numéro de publication internationale: WO 2024/017612

(56) Documents cités:
- WO-A1-2016/170310
- US-A1- 2003 036 858
- US-A1- 2007 104 031
- US-A1- 2009 279 582
- US-A1- 2014 301 166
- US-A1- 2015 246 711
- US-A1- 2018 163 532

## Description

### Domaine technique de l'invention

La présente invention concerne de manière générale les techniques de mesure en milieu immergé, et en particulier les dispositifs ou capteurs permettant la détermination de l'allongement d'au moins une dimension d'un objet immergé.

### Arrière-plan technique

Une éolienne en mer ou éolienne offshore est une éolienne installée en mer, au large des côtes plutôt que dans les terres, afin de tirer partie de l'énergie du vent qui est plus stable et plus intense en mer et de produire de l'électricité en convertissant l'énergie mécanique collectée par la turbine en de l'énergie électrique grâce à un générateur électrique.

Il existe deux types d'éoliennes en mer : les éoliennes fixes, qui sont solidarisées sur des hauts-fonds (par exemple en utilisant des bétons spécifiques pour le scellement des éoliennes), et les éoliennes flottantes qui sont munis de flotteurs et qui offrent l'avantage de pouvoir être construites sur terre et implantées dans des zones où la profondeur des fonds marins ne permet pas la construction de fondations.

Une telle éolienne flottante requiert d'être ancrée sur les fonds marins. On utilise par exemple des lignes d'ancrage qui permettent d'amarrer le flotteur. De telles lignes d'ancrage sont soumises à des contraintes importantes du fait de l'énergie de la houle et du poids du flotteur et du mât de l'éolienne. De telles contraintes résultent en un faible allongement des lignes d'ancrage du fait des contraintes environnementales.

De même certaine plateformes pétrolières sont ancrées sur les fonds marins au moyen notamment de telles lignes d'ancrage. Elles subissent pour les mêmes raisons d'importantes contraintes qui conduisent à leur allongement avec le temps.

Une telle problématique est également observée dans le cadre de l'ancrage de barges, de bouées de grandes dimensions (par exemple portant de l'instrumentation) ou en aquaculture avec l'ancrage des cages aquacoles.

Il peut être intéressant de pouvoir mesurer l'allongement de telles lignes ou liens d'ancrage (cf. US 2018/0163532 A1, par exemple).

La problématique de la mesure de la longueur ou de l'allongement est plutôt bien connue et maîtrisée à terre et de nombreux systèmes et/ou principes de mesure sont utilisés. Malheureusement ces instruments par exemple à base de faisceaux lasers, de mesures infra rouge, d'interféromètres optiques, de radars ou de capteurs à fils ne sont pas adaptés pour les mesures In Situ en mer. En effet, ils sont complexes à mettre en œuvre dans un tel milieu. Ils sont également encombrants et fragiles.

### Résumé de l'invention

Sur la base de ce problème, la présente invention a donc pour tâche de développer un dispositif de détermination de l'allongement d'un lien immergé qui soit simple à installer.

L'invention selon certains de ses modes de réalisations, a également pour objectif de fournir un tel dispositif dont la détermination de l'allongement est plus précise que certains dispositifs de l'art antérieur.

L'invention selon certains de ses modes de réalisations, a également pour objectif de fournir un tel dispositif qui est plus simple d'utilisation que certains dispositifs de l'art antérieur.

L'invention selon certains de ses modes de réalisations, a également pour objectif de fournir un tel dispositif qui est plus robuste que certains dispositifs de l'art antérieur.

L'invention selon certains de ses modes de réalisations, a également pour objectif de fournir un tel dispositif qui est moins couteux que certains dispositifs de l'art antérieur.

L'invention selon certains de ses modes de réalisations, a également pour objectif de fournir un tel dispositif qui peut s'adapter à différents diamètres de liens.

L'invention selon certains de ses modes de réalisations, a également pour objectif de fournir un tel dispositif dont la masse est réduite par rapport à certains dispositifs de l'art antérieur.

L'invention selon certains de ses modes de réalisations, a également pour objectif de fournir un tel dispositif qui est non intrusif et n'endommage pas le lien qu'il mesure.

L'invention selon certains de ses modes de réalisations, a également pour objectif de fournir un tel dispositif qui est moins encombrant que certains dispositifs de l'art antérieur.

L'invention selon certains de ses modes de réalisations, a également pour objectif de fournir un tel dispositif dont l'installation est possible après l'installation du lien à mesurer.

L'invention selon certains de ses modes de réalisations, a également pour objectif de fournir un tel dispositif qui fonctionne de manière autonome sur une longue durée.

En ce qui concerne les dispositifs de mesure, la tâche sur laquelle se base l'invention est résolue par l'objet de la présente invention, tel que défini par la revendication 1, des développements avantageux du dispositif selon l'invention étant spécifiés ci-après.

Ainsi, l'invention concerne un dispositif de détermination de l'allongement d'un lien immergé dans un milieu aquatique entre un premier instant t1 et un second instant t2.

Selon l'invention, le dispositif comprend des moyens d'émission d'ondes acoustiques solidarisés au lien en une première position sur le lien, des moyens de réflexion des ondes acoustiques solidarisés au lien en une seconde position sur le lien et des moyens de réception des ondes acoustiques réfléchies sur les moyens de réflexion, lesdits moyens de réception étant solidarisés au lien en la première position. Selon l'invention, le dispositif comprend des moyens de détermination d'une première distance d1 entre la première position et la seconde position en fonction du temps de trajet des ondes acoustiques en le premier instant t1 et d'une seconde distance d2 entre la première position et la seconde position en fonction du temps de trajet des ondes acoustiques en le second instant t2. Selon l'invention, les moyens de détermination des première et seconde distances comprennent au moins des moyens de détermination d'au moins une valeur de la salinité du milieu aquatique.

Dans la présente invention, on entend par lien tout objet présentant une première extrémité pouvant être solidarisée à un second objet et une seconde extrémité pouvant être solidarisée à un troisième objet. Par exemple, le lien a une forme longitudinale. Par exemple, le lien est un câble pouvant être réalisé en tout matériau (textile, plastique, métal, ...). Par exemple le lien est un lien d'amarrage. Par exemple, le lien est un lien d'ancrage.

Dans la présente invention, on entend par solidarisé au lien en une première position sur le lien pour les moyens d'émission et les moyens de réception le fait que ces derniers sont solidarisés au lien de tels sorte que la distance parcourue par les ondes acoustiques entre les moyens d'émission et les moyens de réception est égale (ou quasiment égale) à la distance parcourue par les ondes acoustiques entre les moyens de réflexion et les moyens de réception.

Selon un mode de réalisation de la présente invention, les moyens de détermination des première et seconde distances comprennent des moyens de détermination d'au moins une valeur de la température du milieu aquatique. Selon un mode de réalisation de la présente invention, les moyens de détermination des première et seconde distances comprennent des moyens de détermination d'au moins une valeur de la salinité du milieu aquatique. Selon un mode de réalisation de la présente invention, les moyens de détermination des première et seconde distances comprennent des moyens de détermination d'au moins une valeur de la salinité du milieu aquatique et des moyens de détermination d'au moins une valeur de la température du milieu aquatique.

Selon l'invention, les moyens de détermination d'au moins une valeur de la salinité du milieu aquatique sont des moyens de détermination d'une première valeur de la salinité s1 du milieu aquatique au premier instant t1 et d'une seconde valeur de la salinité s2 du milieu aquatique au second instant t2, lesdits moyens de détermination des première et seconde distances comprenant des moyens de correction de la première distance d1 en fonction de la première valeur de la salinité s1 et de la seconde distance d2 en fonction de la seconde valeur de la salinité s2.

Selon l'invention dans au moins un de ses modes de réalisation, les moyens de détermination des première et seconde distances comprennent également des moyens de détermination d'au moins une valeur de la température du milieu aquatique. Les moyens de détermination d'au moins une valeur de la température du milieu aquatique sont des moyens de détermination d'une première valeur de la température T1 du milieu aquatique au premier instant t1 et d'une seconde valeur de la température T2 du milieu aquatique au second instant t2, lesdits moyens de détermination des première et seconde distances comprenant des moyens de correction de la première distance d1 en fonction de la première valeur de la température T1 et de la seconde distance d2 en fonction de la seconde valeur de la température T2.

Ainsi, un tel dispositif selon l'invention permet :
- une installation facile (par exemple grâce à un plongeur) après ou concomitamment à la mise en place du lien dont on souhaite surveiller l'allongement ;
- un encombrement et une masse réduites pour faciliter les manipulations et les interventions ;
- une mesure précise de l'allongement ;
- une mesure non intrusive de l'allongement ou l'allongement d'un élément ou lien sous marin par exemple soumis à un effort ou une contrainte ;
- un fonctionnement de manière autonome par exemple au moyen de batteries intégrées dans le dispositif ;
- une mesure de l'allongement sur le long terme ou sur une longue durée par exemple en mettant en œuvre une électronique à basse consommation ;
- une mesure de l'allongement qui ne nécessite pas de connexion (dans une utilisation autonome) selon certains modes de réalisation de l'invention (alimentation électrique ou transmission de données).

Selon un mode de réalisation de la présente invention, les moyens de détermination des première et seconde distances comprennent des moyens de détermination d'au moins une valeur de la pression du milieu aquatique. Selon un mode de réalisation de la présente invention, les moyens de détermination d'au moins une valeur de la pression du milieu aquatique sont des moyens de détermination d'une première valeur de la pression p1 du milieu aquatique au premier instant t1 et d'une seconde valeur de la pression p2 du milieu aquatique au second instant t2, lesdits moyens de détermination des première et seconde distances comprenant des moyens de correction de la première distance d1 en fonction de la première valeur de la pression p1 et de la seconde distance d2 en fonction de la seconde valeur de la pression p2.

Selon un mode de réalisation de la présente invention, les moyens de détermination des première et seconde distances comprennent des moyens de détermination d'au moins une valeur de la profondeur du dispositif de détermination de l'allongement dans le milieu aquatique.

Selon un mode de réalisation de la présente invention, les moyens de détermination d'au moins une valeur de la profondeur du dispositif de détermination de l'allongement dans le milieu aquatique sont des moyens de détermination d'une première valeur de la profondeur z1 du dispositif de détermination de l'allongement dans le milieu aquatique au premier instant t1 et d'une seconde valeur de la profondeur z2 du dispositif de détermination de l'allongement dans le milieu aquatique au second instant t2, lesdits moyens de détermination des première et seconde distances comprenant des moyens de correction de la première distance d1 en fonction de la première valeur de la profondeur z1 et de la seconde distance d2 en fonction de la seconde valeur de la profondeur z2.

Selon un mode de réalisation de l'invention, les moyens de correction tiennent compte de la formule de Mackenzie : $C \left(S, T, z\right) = a 1 + a 2 . T + a 3 . {T}^{2} + a 4 {. T}^{3} + a 5 . \left(S-35\right) + a 6 . z + a 7 {. z}^{2} + a 8 . T . \left(S-35\right) + a 9 . T {. z}^{3}$ avec
a1 = 1448,96 m/s
a2 = 4,591 m/(s.°C)
a3 = -5,304.10⁻² m/(s.°C²)
a4 = 2,374.10⁻⁴ m/(s.°C³)
a5 = 1,340 m/(s.PSU)
a6 = 1,63. 10⁻² s-1
a7 = 1,675. 10⁻⁷ s-1.m-1
a8 = -1,025. 10⁻² m/(s.°C.PSU)
a9 = -7,139. 10⁻¹³ s-1.m-2
T : température en °C
S : salinité en g.L⁻¹
z : profondeur en m.

Selon un mode de réalisation de l'invention, les moyens de détermination d'au moins une valeur de la température du milieu aquatique comprennent un capteur de température. Par exemple, les moyens de détermination de la température sont un capteur de température. Un tel capteur de température peut par exemple comprendre un thermocouple et/ou une sonde à résistance de platine et/ou un thermomètre, ou même tout autre sonde de température.

Selon un mode de réalisation de l'invention, les moyens de détermination d'au moins une valeur de la salinité du milieu aquatique comprennent un capteur de salinité. Par exemple, les moyens de détermination de la salinité sont un capteur de salinité. Un tel capteur de salinité peut par exemple comprendre un réfractomètre optique et/ou un conductimètre et/ou un hydromètre.

Selon un mode de réalisation de l'invention, les moyens de détermination des première et seconde distances comprennent :
- des moyens de détermination d'au moins une valeur de la température du milieu aquatique ; et
- des moyens de détermination d'au moins une valeur de la salinité du milieu aquatique.

Selon un mode de réalisation de l'invention, le dispositif de détermination de l'allongement comprend au moins un transducteur acoustique.

Selon un mode de réalisation de l'invention, les moyens de réflexion sont une cible réfléchissant les ondes acoustiques sur au moins une partie de sa surface (ci-après surface de la cible exposée aux ondes acoustiques).

Selon un mode de réalisation de l'invention, la surface de la cible exposée aux ondes acoustiques est couverte d'une couche d'un matériau anti-salissure (ou antifooling en anglais).

Selon un mode de réalisation de l'invention, la cible est réalisée en un matériau anti-salissure.

Selon un mode de réalisation de l'invention, les moyens d'émission d'ondes acoustiques et les moyens de réception d'ondes acoustiques sont solidarisés au lien au moyen d'un premier couple de mors.

Selon un mode de réalisation de l'invention, les moyens de réflexion d'ondes acoustiques sont solidarisés au lien au moyen d'un second couple de mors.

Selon un mode de réalisation de l'invention, la longueur des mors de chacun des premier et second couples de mors est telle que lors de leur solidarisation sur la ligne (et par exemple lors de leur solidarisation sur la ligne de manière juxtaposée), la distance (ou longueur de ligne) entre les moyens d'émission d'ondes acoustiques et les moyens de réflexion d'ondes acoustiques est déterminée et constitue une distance ou longueur de référence pour la détermination ultérieure de l'allongement de la ligne.

Un procédé non revendiqué pour la détermination de l'allongement d'un lien immergé dans un milieu aquatique entre un premier instant t1 et un second instant t2 comprend les étapes suivantes mises en œuvre à chacun des premier instant t1 et second instant t2 :
- émission d'ondes acoustiques par des moyens d'émission depuis une première position sur le lien ;
- réception en la première position par des moyens de réception des ondes acoustiques réfléchies sur des moyens de réflexion des ondes acoustiques solidarisés en une seconde position sur le lien, le procédé comprenant en outre une étape de :
   détermination d'une première distance d1 entre la première position et la seconde position en fonction du temps de trajet des ondes acoustiques en le premier instant t1 et d'une seconde distance d2 entre la première position et la seconde position en fonction du temps de trajet des ondes acoustiques en le second instant t2,
   l'étape de détermination des première et seconde distances comprenant au moins l'une des étapes suivantes :
      - détermination d'au moins une valeur de la température du milieu aquatique;
      - détermination d'au moins une valeur de la salinité du milieu aquatique.

### Brève description des figures

D'autres caractéristiques et avantages de l'invention apparaitront au cours de la lecture de la description détaillée qui va suivre pour la compréhension de laquelle on se reportera au dessin annexé suivant :

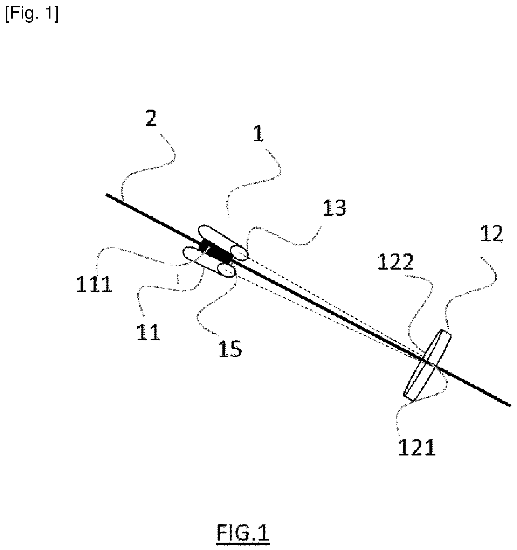

[Fig. 1] montre schématiquement une vue de dessus d'un dispositif de détermination de l'allongement d'un lien selon un mode de réalisation de l'invention.

### Description détaillée de l'invention

Différents aspects de différents modes de réalisation de dispositifs de détermination de l'allongement d'un lien sont décrits plus en détail ci-dessous, en faisant référence aux dessins joints.

La figure 1 montre schématiquement un mode de réalisation exemplaire d'un dispositif de détermination 1 de l'allongement d'un lien 2 immergé selon un mode de réalisation de l'invention.

Dans le cadre de la présente invention, on entend par lien immergé, un lien qui est introduit dans un milieu liquide ou milieu aquatique ou qui est recouvert de liquide. Par exemple, un lien qui est introduit dans une mer ou un océan ou un lac ou une rivière ou un fleuve ou même un lac de rétention (par exemple proche d'un barrage), un bassin ou une piscine est à considérer comme un lien immergé au sens de la présente invention. Beaucoup d'autres exemple de milieu liquide ou aquatique peuvent répondre à la définition de lien immergé au sens de la présente invention.

L'allongement d'un lien peut être proportionnel aux efforts ou aux contraintes auxquels est soumis le lien. Ceci est le cas par exemple dans le cas d'un lien qui est une ligne textile élastique telle que couramment utilisée dans les applications d'ancrage en mer. Les efforts peuvent être causés par la houle, le vent ou encore par la variation de hauteur d'eau due à la marée.

Tout d'abord, l'allongement d'un matériau élastique peut se calculer avec la loi de Hooke par la formule suivante : $epsilon = sigma / E$ $epsilon = ΔL / L 0$ où
epsilon : déformation sans unité
sigma : contrainte en Pa
E : module de Young en Pa
ΔL : allongement en m
L0 : longueur initiale en m

Par exemple, la déformation est le rapport de l'allongement par la longueur initiale, la contrainte est le rapport de la force appliquée par la surface du matériau et enfin, le module de Young ou module d'élasticité, est une caractéristique du matériau utilisé.

Dans le cadre du présent dispositif de détermination 1 de l'allongement du lien 2 selon le présent mode de réalisation de l'invention, par exemple, le lien 2 est une ligne textile élastique 2 dans un milieu aquatique qui est par exemple la mer.

Le dispositif de détermination 1 comprend des moyens d'émission d'ondes acoustiques 11 solidarisés au lien en une première position 111 sur le lien 2, des moyens de réflexion des ondes acoustiques 12 solidarisés au lien 2 en une seconde position 121 sur le lien 2 et des moyens de réception des ondes acoustiques 13 réfléchies sur les moyens de réflexion 12, les moyens de réception étant solidarisés au lien 2 en la première position 111.

Dans le cadre du présent mode de réalisation de l'invention, les moyens d'émission d'ondes acoustiques 11 sont par exemple un transducteur acoustique 11. Par exemple, il peut s'agir du transducteur acoustique nommé « ALTUS » et commercialisé par l'entreprise NKE Instrumentation. Par exemple, le transducteur 11 émet une impulsion ultra-sonique de fréquence 2 MHz qui se réfléchit sur les moyens de réflexion d'onde acoustiques 12 qui sont par exemple une cible 12 réfléchissant les ondes acoustiques sur au moins une partie de sa surface (ci-après surface de la cible exposée aux ondes acoustiques).

Par exemple, la surface de la cible 12 exposée aux ondes acoustiques est couverte d'une couche 122 d'un matériau anti-salissure (ou antifooling en anglais). Cela peut être par exemple une couche de cuivre. Cela permet d'éviter la perturbation de la réflexion des ondes acoustiques sur la cible (qui aurait pour effet de perturber le fonctionnement ou la résolution du dispositif 1).

Selon une alternative conforme à la présente invention du présent mode de réalisation la cible 12 peut être réalisée en un matériau anti-salissure (ou antifooling en anglais). Cela peut être par exemple une cible en cuivre.

Ainsi, les ondes acoustiques sont réfléchies sur la cible 12 et reviennent sur le transducteur 11, 13 sous forme d'un écho. Ainsi, dans le cadre du présent mode de réalisation, le transducteur 11, 13 est à la fois un moyen d'émission d'onde acoustiques 11 et un moyen de réception d'ondes acoustiques 13 au sens de la présente invention. Bien entendu, selon d'autres modes de réalisation de la présente invention, on peut mettre en œuvre deux (ou même plus) transducteurs, l'un étant les moyens d'émission d'ondes acoustiques 11 et l'autre étant les moyens de réception des ondes acoustiques 13.

Sur la figure 1, on illustre un cas d'un transducteur comprenant des moyens d'émission d'ondes acoustiques 11 ci-après également appelé un module d'émission d'ondes acoustiques 11 et des moyens de réception d'ondes acoustiques 13 ci après également appelé un module de réception d'ondes acoustiques 13. Les deux modules d'émission 11 et de réception 13 sont solidarisés à la ligne 2 en une première position au moyen d'un premier dispositif de solidarisation 15 qui peut être par exemple un système à base d'un premier couple de mors. Par exemple, les moyens de réflexion des ondes acoustiques 12 ci après également appelés un module de réflexion des ondes acoustiques 12 sont solidarisés à la ligne 2 en une seconde position au moyen d'un second dispositif de solidarisation (non représenté sur la figure 1) qui peut être par exemple un système à base d'un second couple de mors.

Ainsi, grâce aux premier et second couples de mors, les module d'émission 11 et module de réception 13 ainsi que le module de réflexion 12 sont solidarisés fermement au lien 2 de manière à éviter leur glissement le long de la ligne 2.

De manière avantageuse, chacun des couples de mors présente une forme particulière et en particulier une longueur permettant de procurer un point de référence pour la mesure de la longueur du lien prise en considération et optimiser ainsi la précision de la mesure finale de l''allongement du lien (l'allongement du lien étant proportionnel à la longueur de référence du lien). Ainsi, selon un mode de réalisation de l'invention, la longueur des mors de chacun des premier et second couples de mors est telle que lors de leur solidarisation sur la ligne (et par exemple lors de leur solidarisation sur la ligne de manière juxtaposée), la distance (ou longueur de ligne) entre les moyens d'émission d'ondes acoustiques et les moyens de réflexion d'ondes acoustiques est déterminée et constitue une distance ou longueur de référence pour la détermination ultérieure de l'allongement de la ligne.

Selon le mode de réalisation de l'invention, le dispositif 1 comprend des moyens de détermination d'une distance entre la première position 111 (qui correspond à la localisation des moyens d'émission 11 et des moyens de réception 13) et la seconde position 121 (qui correspond à la localisation des moyens de réflexion 12) en fonction du temps de trajet par exemple d'une impulsion d'ondes acoustiques émise par les moyens d'émission, ici le transducteur 11, 13.

Les moyens de détermination de la distance (qui comprennent par exemple un calculateur et une mémoire alimentés par une batterie qui pilotent le transducteur) calculent donc le temps écoulé entre l'impulsion d'ondes acoustiques et la réception de cette impulsion acoustique (ou sonore) réfléchie.

Par exemple, la distance dépend de la vitesse de l'impulsion et du temps écoulé. Or, dans le présent cas, l'impulsion acoustique (ou sonore) parcourt un aller-retour de la distance d à déterminer, ce qui nous donne la formule suivante : $d = c / \left(2 . t\right)$
d : distance en m
c : célérité en m/s
t : temps en s

Ainsi, selon un mode de réalisation de l'invention, pour déterminer un allongement du lien 2 entre un premier instant t1 et un second instant t2, il peut être déterminé la distance à t1 et la distance à t2 (avec t2 > t1). L'allongement correspond alors à la différence des distances déterminées à t2 et t1.

Ainsi, selon le mode de réalisation de l'invention, le dispositif 1 comprend des moyens de détermination d'une première distance d1 entre la première position 111 et la seconde position 121 en fonction du temps de trajet des ondes acoustiques en le premier instant t1 et d'une seconde distance d2 entre la première position 111 et la seconde position 121 en fonction du temps de trajet des ondes acoustiques en le second instant t2.

L'inventeur a remarqué que la mesure de l'allongement peut varier légèrement d'un jour à l'autre ou en fonction de l'environnement et notamment des caractéristiques du milieu aquatique dans lequel le lien est immergé. Une première explication peut être que les émetteur et récepteur acoustiques présentent chacun une certaine résolution et que la mesure est donc perturbée par un bruit intrinsèque aux émetteurs et récepteurs acoustiques. Une grande quantité de paramètres extérieurs peuvent également influer sur la mesure de l'allongement. Par exemple, la pression, la profondeur, la turbidité, la présence de micro-organismes sur le chemin acoustique, la température, la luminosité, et bien d'autres paramètres.

L'inventeur a observé que la température et la salinité du milieu aquatique influencent principalement les résultats de la détermination de l'allongement du lien 2 grâce à un dispositif selon l'invention.

Ainsi, selon un mode de réalisation de l'invention, les moyens de détermination des première et seconde distances (d1 et d2) comprennent par exemple des moyens de détermination d'au moins une valeur de la température du milieu aquatique et des moyens de détermination d'au moins une valeur de la salinité du milieu aquatique. Bien entendu, selon des variantes de ce mode de réalisation, les moyens de détermination des première et seconde distances (d1 et d2) peuvent ne comprendre que des moyens de détermination d'au moins une valeur de la salinité du milieu aquatique. Ainsi, selon un mode de réalisation de l'invention, les moyens de détermination d'au moins une valeur de la température du milieu aquatique comprennent un capteur de température.

Ainsi, selon un mode de réalisation de l'invention, les moyens de détermination d'au moins une valeur de la salinité du milieu aquatique comprennent un capteur de salinité.

Par exemple, un capteur de température et de salinité peut être le capteur STPS commercialisé par la société NKE Instrumentation.

Selon l'invention, les moyens de détermination d'au moins une valeur de la salinité du milieu aquatique sont des moyens de détermination d'une première valeur de la salinité s1 du milieu aquatique au premier instant t1 et d'une seconde valeur de la salinité s2 du milieu aquatique au second instant t2, les moyens de détermination des première et seconde distances comprenant des moyens de correction de la première distance d1 en fonction de la première valeur de la salinité s1 et de la seconde distance d2 en fonction de la seconde valeur de la salinité s2.

Selon un mode de réalisation de l'invention, les moyens de détermination d'au moins une valeur de la température du milieu aquatique sont des moyens de détermination d'une première valeur de la température T1 du milieu aquatique au premier instant t1 et d'une seconde valeur de la température T2 du milieu aquatique au second instant t2, les moyens de détermination des première et seconde distances comprenant des moyens de correction de la première distance d1 en fonction de la première valeur de la température T1 et de la seconde distance d2 en fonction de la seconde valeur de la température T2.

En effet, la longueur calculée dépend de la célérité du son dans l'eau, qui dépend de la température, de la salinité (et également de la profondeur ou de la pression). Elle vaut 1489,82 m.s-1 pour une température de 10°C, une salinité de 35 g.L-1 et une profondeur de 1 m. La célérité peut être calculée à l'aide de la formule de Mackenzie qui est une formule déterminée empiriquement. Les termes a1 à a9 sont des constantes.

Ainsi, conformément à un mode de réalisation de l'invention, les moyens de correction tiennent compte de la formule de Mackenzie : $C \left(S, T, z\right) = a 1 + a 2 . T + a 3 . {T}^{2} + a 4 {. T}^{3} + a 5 . \left(S-35\right) + a 6 . z + a 7 {. z}^{2} + a 8 . T . \left(S-35\right) + a 9 . T {. z}^{3}$ avec
a1 = 1448,96 m/s
a2 = 4,591 m/(s.°C)
a3 = -5,304.10⁻² m/(s.°C²)
a4 = 2,374.10⁻⁴ m/(s.°C³)
a5 = 1,340 m/(s.PSU)
a6 = 1,63. 10⁻² s-1
a7 = 1,675. 10⁻⁷ s-1.m-1
a8 = -1,025. 10⁻² m/(s.°C.PSU)
a9 = -7,139. 10⁻¹³ s-1.m-2
   où
T : température en °C
S : salinité en g.L⁻¹
z : profondeur en m.

Un procédé pour la détermination de l'allongement d'un lien immergé dans un milieu aquatique entre un premier instant t1 et un second instant t2 comprend les étapes suivantes mises en œuvre à chacun des premier instant t1 et second instant t2 :
- émission d'ondes acoustiques par des moyens d'émission 11 depuis une première position 111 sur le lien 2 ;
- réception en la première position 111 par des moyens de réception 13 des ondes acoustiques réfléchies sur des moyens de réflexion 12 des ondes acoustiques solidarisés en une seconde position 121 sur le lien 2.

Selon un mode de réalisation, le procédé comprend une étape de :
détermination d'une première distance d1 entre la première position 111 et la seconde position 121 en fonction du temps de trajet des ondes acoustiques en le premier instant t1 et d'une seconde distance d2 entre la première position 111 et la seconde position 121 en fonction du temps de trajet des ondes acoustiques en le second instant t2.

Selon un mode de réalisation, l'étape de détermination des première et seconde distances comprend au moins l'une des étapes suivantes :
- détermination d'au moins une valeur de la température du milieu aquatique;
- détermination d'au moins une valeur de la salinité du milieu aquatique.

L'invention n'est pas limitée aux modes de réalisation du dispositif de détermination de l'allongement d'un lien selon l'invention montrés dans les dessins.

Cela s'applique aussi, en particulier, à l'union potentielle de composants. Ainsi il est concevable que certains modules, composants ou boitiers décrit ci-dessus puissent être reliés en une seule pièce l'un avec l'autre.

L'invention a été décrite ci-dessus sur la base d'exemples de conception et de variantes (qui peuvent aussi être appelés modifications, développements ultérieurs, alternatives ou options). L'invention elle-même est définie par les revendications jointes. Les illustrations et la description des exemples de conception servent à expliquer et à comprendre l'invention revendiquée. Des caractéristiques individuelles d'un exemple de mode de conception ou de ses variantes peuvent être combinées avec un quelconque autre exemple de conception ou de variante connexe et doivent aussi être considérées comme divulguées dans ce sens même si elles ne sont pas expressément décrites dans le contexte, sauf si cela s'avère évidemment impossible ou sans sens pour des raisons techniques ou physiques. A l'inverse, des caractéristiques individuelles d'un exemple de conception ou de ses variantes ne limitent pas une invention et peuvent être omises si la combinaison restante de caractéristiques est couverte par la portée des revendications.

### Liste de signes de référence

- 1: dispositif de détermination de l'allongement d'un lien
- 2: lien
- 11: moyens d'émission d'ondes acoustiques
- 13: moyens de réception d'ondes acoustiques
- 12: moyens de réflexion d'ondes acoustiques
- 15: dispositif de solidarisation des moyens d'émission et des moyens de réception au lien
- 111: première position
- 121: seconde position
- 122: couche d'un matériau antisalissure

## Revendications

1. Dispositif de détermination (1) de l'allongement d'un lien immergé (2) dans un milieu aquatique entre un premier instant t1 et un second instant t2, **caractérisé en ce qu'**il comprend des moyens d'émission d'ondes acoustiques (11) solidarisés au lien en une première position (111) sur le lien (2), des moyens de réflexion des ondes acoustiques (12) solidarisés au lien (2) en une seconde position (121) sur le lien (2) et des moyens de réception des ondes acoustiques (13) réfléchies sur les moyens de réflexion (12), lesdits moyens de réception étant solidarisés au lien en la première position (111), **en ce qu'**il comprend des moyens de détermination d'une première distance d1 entre la première position (111) et la seconde position (121) en fonction du temps de trajet des ondes acoustiques en le premier instant t1 et d'une seconde distance d2 entre la première position (111) et la seconde position (121) en fonction du temps de trajet des ondes acoustiques en le second instant t2, et **en ce que** les moyens de détermination des première et seconde distances comprennent au moins des moyens de détermination d'au moins une valeur de la salinité du milieu aquatique ;
**en ce que** les moyens de détermination d'au moins une valeur de la salinité du milieu aquatique sont des moyens de détermination d'une première valeur de la salinité s1 du milieu aquatique au premier instant t1 et d'une seconde valeur de la salinité s2 du milieu aquatique au second instant t2, lesdits moyens de détermination des première et seconde distances comprenant des moyens de correction de la première distance d1 en fonction de la première valeur de la salinité s1 et de la seconde distance d2 en fonction de la seconde valeur de la salinité s2.

2. Dispositif de détermination selon la revendication 1, **caractérisé en ce que** les moyens de détermination d'au moins une valeur de la salinité du milieu aquatique comprennent un capteur de salinité.

3. Dispositif de détermination selon l'une quelconque des revendications précédentes, **caractérisé en ce que** les moyens de détermination des première et seconde distances comprennent également :
- des moyens de détermination d'au moins une valeur de la température du milieu aquatique ;
et **en ce que** les moyens de détermination d'au moins une valeur de la température du milieu aquatique sont des moyens de détermination d'une première valeur de la température T1 du milieu aquatique au premier instant t1 et d'une seconde valeur de la température T2 du milieu aquatique au second instant t2, lesdits moyens de détermination des première et seconde distances comprenant des moyens de correction de la première distance d1 en fonction de la première valeur de la température T1 et de la seconde distance d2 en fonction de la seconde valeur de la température T2.

4. Dispositif de détermination selon la revendication 3, **caractérise en ce que** les moyens de correction tiennent compte de la formule de Mackenzie : $C \left(S, T, z\right) = a 1 + a 2 . T + a 3 . {T}^{2} + a 4 {. T}^{3} + a 5 . \left(S-35\right) + a 6 . z + a 7 {. z}^{2} + a 8 . T . \left(S-35\right) + a 9 . T {. z}^{3}$ avec
a1 = 1448,96 m/s
a2 = 4,591 m/(s.°C)
a3 = -5,304.10⁻² m/(s.°C²)
a4 = 2,374.10⁻⁴ m/(s.°C³)
a5 = 1,340 m/(s.PSU)
a6 = 1,63. 10⁻² s-1
a7 = 1,675. 10⁻⁷ s-1.m-1
a8 = -1,025. 10⁻² m/(s.°C.PSU)
a9 = -7,139. 10⁻¹³ s-1.m-2
T : température en °C
S : salinité en g.L⁻¹
z : profondeur en m.

5. Dispositif de détermination selon la revendication 3 ou 4, **caractérisé en ce que** les moyens de détermination d'au moins une valeur de la température du milieu aquatique comprennent un capteur de température.

6. Dispositif de détermination selon l'une quelconque des revendications précédentes, **caractérisé en ce que** les moyens de réflexion (12) sont une cible réfléchissant les ondes acoustiques sur au moins une partie de sa surface.

7. Dispositif de détermination selon la revendication 6, **caractérisé en ce que** la surface de la cible (12) exposée aux ondes acoustiques est couverte d'une couche (122) d'un matériau anti-salissure.

8. Dispositif de détermination selon la revendication 6, **caractérisé en ce que** la cible (12) est réalisée en un matériau anti-salissure.

## Patentansprüche

1. Bestimmungsvorrichtung (1) der Dehnung einer eingetauchten Verbindungsleine (2) in einem wässrigen Medium zwischen einem ersten Zeitpunkt t1 und einem zweiten Zeitpunkt t2, **dadurch gekennzeichnet, dass** sie Mittel zum Aussenden akustischer Wellen (11) umfasst, die mit der Leine in einer ersten Position (111) auf der Leine (2) fest verbunden sind, Mittel zur Reflexion akustischer Wellen (12), die mit der Leine (2) in einer zweiten Position (121) auf der Leine (2) fest verbunden sind, und Mittel zum Empfangen der an den Reflexionsmitteln (12) reflektierten akustischen Wellen (13), wobei die Empfangsmittel mit der Leine in der ersten Position (111) fest verbunden sind, dass sie Mittel zur Bestimmung eines ersten Abstands d1 zwischen der ersten Position (111) und der zweiten Position (121) in Abhängigkeit von der Laufzeit der akustischen Wellen zum ersten Zeitpunkt t1 und eines zweiten Abstands d2 zwischen der ersten Position (111) und der zweiten Position (121) in Abhängigkeit von der Laufzeit der akustischen Wellen zum zweiten Zeitpunkt t2 umfasst, und dass die Mittel zur Bestimmung des ersten und des zweiten Abstands mindestens Mittel zur Bestimmung mindestens eines Werts der Salinität des wässrigen Mediums umfassen;
dass die Mittel zur Bestimmung mindestens eines Werts der Salinität des wässrigen Mediums Mittel zur Bestimmung eines ersten Werts der Salinität s1 des wässrigen Mediums zum ersten Zeitpunkt t1 und eines zweiten Werts der Salinität s2 des wässrigen Mediums zum zweiten Zeitpunkt t2 sind, wobei die Mittel zur Bestimmung des ersten und des zweiten Abstands Mittel zur Korrektur des ersten Abstands d1 in Abhängigkeit vom ersten Wert der Salinität s1 und des zweiten Abstands d2 in Abhängigkeit vom zweiten Wert der Salinität s2 umfassen.

2. Bestimmungsvorrichtung nach Anspruch 1, **dadurch gekennzeichnet, dass** die Mittel zur Bestimmung mindestens eines Werts der Salinität des wässrigen Mediums einen Salinitätssensor umfassen.

3. Bestimmungsvorrichtung nach einem der vorhergehenden Ansprüche, **dadurch gekennzeichnet, dass** die Mittel zur Bestimmung des ersten und des zweiten Abstands ferner umfassen:
- Mittel zur Bestimmung mindestens eines Werts der Temperatur des wässrigen Mediums;
und dass die Mittel zur Bestimmung mindestens eines Werts der Temperatur des wässrigen Mediums Mittel zur Bestimmung eines ersten Werts der Temperatur T1 des wässrigen Mediums zum ersten Zeitpunkt t1 und eines zweiten Werts der Temperatur T2 des wässrigen Mediums zum zweiten Zeitpunkt t2 sind, wobei die Mittel zur Bestimmung des ersten und des zweiten Abstands Mittel zur Korrektur des ersten Abstands d1 in Abhängigkeit vom ersten Wert der Temperatur T1 und des zweiten Abstands d2 in Abhängigkeit vom zweiten Wert der Temperatur T2 umfassen.

4. Bestimmungsvorrichtung nach Anspruch 3, **dadurch gekennzeichnet, dass** die Korrekturmittel die Mackenzie-Formel berücksichtigen: $C \left(S, T, z\right) = a 1 + a 2 ⋅ T + a 3 ⋅ {T}^{2} + a 4 ⋅ {T}^{3} + a 5 ⋅ \left(S-35\right) + a 6 ⋅ z + a 7 ⋅ {z}^{2} + a 8 ⋅ T ⋅ \left(S-35\right) + a 9 ⋅ T ⋅ {z}^{3}$ wobei
a1 = 1448,96 m/s
a2 = 4,591 m/(s·°C)
a3 = -5,304·10⁻² m/(s·°C²)
a4 = 2,374·10⁻⁴ m/(s·°C³)
a5 = 1,340 m/(s·PSU)
a6 = 1,63·10⁻² s⁻¹
a7 = 1,675·10⁻⁷ s⁻¹·m⁻¹
a8 = -1,025·10⁻² m/(s·°C·PSU)
a9 = -7,139·10⁻¹³ s⁻¹·m⁻²
T: Temperatur in °C
S: Salinität in g·L⁻¹
z: Tiefe in m.

5. Bestimmungsvorrichtung nach Anspruch 3 oder 4, **dadurch gekennzeichnet, dass** die Mittel zur Bestimmung mindestens eines Werts der Temperatur des wässrigen Mediums einen Temperatursensor umfassen.

6. Bestimmungsvorrichtung nach einem der vorhergehenden Ansprüche, **dadurch gekennzeichnet, dass** die Reflexionsmittel (12) ein Ziel sind, das die akustischen Wellen an mindestens einem Teil seiner Oberfläche reflektiert.

7. Bestimmungsvorrichtung nach Anspruch 6, **dadurch gekennzeichnet, dass** die den akustischen Wellen ausgesetzte Oberfläche des Ziels (12) mit einer Schicht (122) aus einem bewuchshemmenden Material bedeckt ist.

8. Bestimmungsvorrichtung nach Anspruch 6, **dadurch gekennzeichnet, dass** das Ziel (12) aus einem bewuchshemmenden Material besteht.

## Claims

1. A device (1) for determining the elongation of a link (2) immersed in an aquatic environment between a first instant t1 and a second instant t2, **characterized in that** it comprises acoustic wave transmitting means (11) secured to the link at a first position (111) on the link (2), acoustic wave reflecting means (12) secured to the link (2) at a second position (121) on the link (2), and means (13) for receiving the acoustic waves reflected by the reflecting means (12), said receiving means being secured to the link at the first position (111), **in that** it comprises means for determining a first distance d1 between the first position (111) and the second position (121) as a function of the travel time of the acoustic waves at the first instant t1 and a second distance d2 between the first position (111) and the second position (121) as a function of the travel time of the acoustic waves at the second instant t2, and **in that** the means for determining the first and second distances comprise at least means for determining at least one salinity value of the aquatic environment;
wherein the means for determining at least one salinity value of the aquatic environment are means for determining a first salinity value s1 of the aquatic environment at the first instant t1 and a second salinity value s2 of the aquatic environment at the second instant t2, said means for determining the first and second distances comprising means for correcting the first distance d1 as a function of the first salinity value s1 and the second distance d2 as a function of the second salinity value s2.

2. The determination device according to claim 1, **characterized in that** the means for determining at least one salinity value of the aquatic environment comprise a salinity sensor.

3. The determination device according to any one of the preceding claims, **characterized in that** the means for determining the first and second distances further comprise:
means for determining at least one temperature value of the aquatic environment;
and **in that** the means for determining at least one temperature value of the aquatic environment are means for determining a first temperature value T1 of the aquatic environment at the first instant t1 and a second temperature value T2 of the aquatic environment at the second instant t2, said means for determining the first and second distances comprising means for correcting the first distance d1 as a function of the first temperature value T1 and the second distance d2 as a function of the second temperature value T2.

4. The determination device according to claim 3, **characterized in that** the correction means take into account the Mackenzie formula: $C \left(S, T, z\right) = a 1 + a 2 . T + a 3 . {T}^{2} + a 4 {. T}^{3} + a 5 . \left(S-35\right) + a 6 . z + a 7 {. z}^{2} + a 8 . T . \left(S-35\right) + a 9 . T {. z}^{3}$ avec
a1 = 1448,96 m/s
a2 = 4,591 m/(s.°C)
a3 = -5,304.10⁻² m/(s.°C²)
a4 = 2,374.10⁻⁴ m/(s.°C³)
a5 = 1,340 m/(s.PSU)
a6 = 1,63. 10⁻² s⁻¹
a7 = 1,675. 10⁻⁷ s⁻¹.m⁻¹
a8 = -1,025. 10⁻² m/(s.°C.PSU)
a9 = -7,139. 10⁻¹³ s⁻¹.m⁻²
T: temperature in °C
S: salinity in g·L⁻¹
z: depth in m.

5. The determination device according to claim 3 or 4, **characterized in that** the means for determining at least one temperature value of the aquatic environment comprise a temperature sensor.

6. The determination device according to any one of the preceding claims, **characterized in that** the reflecting means (12) comprise a target reflecting the acoustic waves over at least a portion of its surface.

7. The determination device according to claim 6, **characterized in that** the surface of the target (12) exposed to the acoustic waves is covered with a layer (122) of an anti-fouling material.

8. The determination device according to claim 6, **characterized in that** the target (12) is made of an anti-fouling material.
